(19) Europäisches Patentamt / European Patent Office / Office européen des brevets

(11) **EP 4 514 666 B1**

(12) **EUROPEAN PATENT SPECIFICATION**

(45) Date of publication and mention
of the grant of the patent:
**24.06.2026  Bulletin 2026/26**

(21) Application number: **23721030.7**

(22) Date of filing: **25.04.2023**

(51) International Patent Classification (IPC):
*B60W 40/068* (2012.01)    *B60W 40/12* (2012.01)
*B60W 20/12* (2016.01)    *B60W 10/06* (2006.01)
*B60W 10/08* (2006.01)    *B60W 10/26* (2006.01)
*G01M 17/02* (2006.01)    *B60W 40/10* (2012.01)
*B60W 50/00* (2006.01)

(52) Cooperative Patent Classification (CPC):
**B60W 20/12; B60W 10/06; B60W 10/08;
B60W 10/26; B60W 40/1005; B60W 40/12;
G01M 17/007; G01M 17/02;** B60W 2050/0028;
B60W 2520/04; B60W 2530/10; B60W 2530/16;
B60W 2530/20; B60W 2555/20; B60W 2556/10

(86) International application number:
**PCT/SE2023/050375**

(87) International publication number:
**WO 2023/211339 (02.11.2023 Gazette 2023/44)**

(54) **CONTROL DEVICE AND METHOD FOR PREDICTING ROLLING RESISTANCE**

STEUERUNGSVORRICHTUNG UND VERFAHREN ZUR VORHERSAGE DES
ROLLWIDERSTANDS

DISPOSITIF DE COMMANDE ET PROCÉDÉ DE PRÉVISION DE RÉSISTANCE AU ROULEMENT

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **29.04.2022  SE 2250513
29.04.2022  SE 2250514
29.04.2022  SE 2250515**

(43) Date of publication of application:
**05.03.2025  Bulletin 2025/10**

(73) Proprietor: **Scania CV AB**
**151 87 Södertälje (SE)**

(72) Inventors:
• **USSNER, Matthias**
**151 52 Södertälje (SE)**
• **HYTTINEN, Jukka**
**151 32 Södertälje (SE)**
• **JOHANSSON, Svante**
**162 47 Vällingby (SE)**
• **KIES, Antonius**
**152 42 Södertälje (SE)**
• **SANDBERG, Tony**
**645 44 Strängnäs (SE)**

(74) Representative: **Scania CV AB**
**Patents, GP 117kv**
**151 87 Södertälje (SE)**

(56) References cited:
WO-A1-2019/016471    DE-A1- 102015 113 431
DE-A1- 102015 116 600    GB-A- 2 561 409

• **EJSMONT JERZY ET AL: "Influence of
temperature on the tyre rolling resistance",
INTERNATIONAL JOURNAL OF AUTOMOTIVE
TECHNOLOGY, THE KOREAN SOCIETY OF
AUTOMOTIVE ENGINEERS, HEIDELBERG, vol.
19, no. 1, 3 October 2017 (2017-10-03), pages 45 -
54, XP036332008, ISSN: 1229-9138, [retrieved on
20171003], DOI: 10.1007/S12239-018-0005-4**

- **EJSMONT JERZY ET AL: "Temperature Influence on Tire Rolling Resistance Measurements Quality", INTERNATIONAL JOURNAL OF AUTOMOTIVE TECHNOLOGY, THE KOREAN SOCIETY OF AUTOMOTIVE ENGINEERS, HEIDELBERG, vol. 23, no. 1, 1 February 2022 (2022-02-01), pages 109 - 123, XP037698118, ISSN: 1229-9138, [retrieved on 20220221], DOI: 10.1007/S12239-022-0009-Y**

**Description**

TECHNICAL FIELD

The present disclosure relates in general to a method for predicting rolling resistance of a vehicle as well as a control device configured to predict rolling resistance. Furthermore, the present disclosure further relates in general to a computer program and a computer-readable medium. The present disclosure also relates in general to a vehicle.

The present disclosure further relates in general to a method for controlling a vehicle. Moreover, the present disclosure relates in general to a method for estimating distance to empty for a vehicle.

BACKGROUND

The strive to reduce emissions and improve fuel economy of heavy vehicles, such as trucks and buses, has led to the development of vehicles comprising propulsion systems that uses one or more electrical machines powered by batteries. Examples of such vehicles include Hybrid Electric Vehicles (HEVs), Plug-in Hybrid Electric Vehicles (PHEVs), and Battery Electric Vehicles (BEVs). One of the most important factors to consider for this type of vehicle is the driving range. Every small increment of improved efficiency accounts and is making significant impact to green-house gas emissions. The energy efficiency and desired driving range have a direct impact on the necessary size of the batteries, and thereby also the manufacturing costs as well as operating costs of the vehicle.

The possible driving range of a vehicle is dependent on the propulsion power needed for driving the vehicle as desired. It is previously known to estimate the propulsion power needed based on historical data regarding average energy consumption rates and/or efficiency of the vehicle. However, the accuracy of such an estimation is generally poor since the power consumption of a vehicle is affected by a large number of factors that may vary largely over time.

If the necessary propulsion power cannot be sufficiently accurate determined, it may for example be necessary to increase the back-up energy stored in the vehicle to account for potential errors in said estimation. This may in turn affect the number and/or duration of charging operations needed, and/or require an increase of the battery size in the vehicle to safely ensure a desired driving range. Thus, a more accurate estimation would have potential to provide a considerable reduction of total cost of operation of the vehicle during the service life thereof.

Prior art is known from WO 2019/016471 A1 which discloses a method and a device for determining a predictive rolling resistance using a time-dependent model based on ambient temperature and driving conditions.

SUMMARY

The object of the present invention is to enable improvements in estimations of propulsion power needed for driving a vehicle.

The object is achieved by the subject-matter of the appended independent claims.

The present disclosure provides a method, performed by a control device, for predicting rolling resistance of a vehicle according to independent claim 1.

The herein described method improves the accuracy in predicted rolling resistance of a vehicle and thereby *inter alia* enables more reliable estimations of the energy consumption of the vehicle and thereby the propulsion power needed for driving the vehicle. More specifically, the herein described method improves the accuracy in predicted rolling resistance since it takes into account transient rolling resistance.

Rolling resistance is one of the most important factors affecting the force opposing the vehicle's motion and accounts for a large part of the power loss during driving. Still, prior art methods for estimating energy consumption of a vehicle merely considers predefined (static) rolling resistance coefficients. In other words, such previously known methods for estimating energy consumption does not take into account the fact that the rolling resistance may change over time. The present inventors have however found that ambient temperature and transient rolling resistance has a considerable effect on the energy consumption of the vehicle, and that the transient behavior of the rolling resistance is dependent of the tire rubber temperature at the circumferential portion of the tire. Furthermore, it has been found that it is possible to model the transient rolling resistance and thereby obtain information of how the rolling resistance changes over time. Knowledge of the variation of rolling resistance over time naturally gives unprecedented advantages over using static rolling resistance values when estimating the energy consumption of the vehicle.

Modelling transient rolling resistance may advantageously further be based on an estimated current rubber temperature of at least one tire of the vehicle at a point in time at which it is expected that the variation in tire rubber temperature is initiated. Such a point in time may be when starting to drive after a long standstill, but also e.g. after an event, such as a shorter standstill, where the tire rubber temperature has cooled down, but not reached the ambient temperature. Such a point in time may also be at a change in vehicle speed. This further improves the accuracy in the predicted rolling resistance.

The method for predicting rolling resistance as described herein may further comprise a step of determining an expectation of variation in tire rubber temperature at a circumferential portion of at least one tire of the vehicle over time based on at least one indication selected from the group comprising an indication that a driving event or portion thereof is to be initiated after a vehicle stop, an indication of a change in weather conditions that may affect rolling resistance, and an indication of a change in the predicted or determined driving conditions sufficient to affect rolling resistance. These mentioned indications are all situations where there is a high likelihood of a change in the temperature of the tire at the circumferential portion thereof and thus a variation in rolling resistance over time.

The indication of a change in predicted or determined driving conditions sufficient to affect rolling resistance may comprise a change in vehicle speed which is above a predetermined threshold. Thereby, it is avoided that only very small changes in vehicle speed which have no substantial effect on the rolling resistance as seen over a whole driving event are considered in the prediction of the rolling resistance, thereby reducing the computational efforts needed.

According to the invention, the modelling of transient rolling resistance mentioned above is performed according to the equation:

$$C_{rr}(t) = k_1 * T_{tire-cir}{}^3(t) + k_2 * T_{tire-cir}{}^2(t) + k_3 * T_{tire-cir}(t) + k_4$$

wherein

$C_{rr}(t)$ represent the time-dependent rolling resistance,
$T_{tire-cir}(t)$ represent the time-dependent temperature of the tire at the circumferential portion thereof,
$k_1$, $k_2$, and $k_3$ each represents coefficients, and
$k_4$ represents a constant,
each of $k_1$, $k_2$, $k_3$ and $k_4$ being dependent of ambient temperature and driving conditions of the vehicle.

The method may further comprise, when it is predicted or determined that the tire rubber temperature at a circumferential portion of at least one tire of the vehicle will have a temperature equal to or above a predetermined temperature threshold for an identified period of time, predicting rolling resistance of the vehicle during said identified period of time based on ambient temperature and tire rubber temperature at a circumferential portion of at least one tire of the vehicle. Thereby, prediction of rolling resistance when it may be expected that there is essentially a thermal balance between the heat dissipated in the tire and the surroundings of the tire, the prediction of rolling resistance may be simplified.

In such a case, predicting rolling resistance of the vehicle during said identified period of time may comprise calculating an adjustment factor for rolling resistance based on ambient temperature and tire rubber temperature at a circumferential portion of at least one tire, and calculating an adjusted rolling resistance for the identified period of time based on a predetermined rolling resistance as determined through experimental results and the calculated adjustment factor, thereby obtaining the predicted rolling resistance during said identified period of time.

The present invention further provides a method, performed by a control device, for controlling a vehicle according to claim 7. Said method has the advantage of enabling a better control of the vehicle in view of the improved accuracy in predicted rolling resistance.

According to one alternative, said method for controlling a vehicle may comprise, based on the obtained information regarding predicted rolling resistance of the vehicle, planning an upcoming driving event for the vehicle. If so, the step of controlling the vehicle based on the obtained information regarding predicted rolling resistance of the vehicle may comprise controlling the vehicle in accordance with the planned driving event. This *inter alia* has the advantage of enabling a more cost-effective driving event of the vehicle.

According to another alternative, said method for controlling a vehicle may comprise, in consideration of the obtained information regarding predicted rolling resistance of the vehicle, determining a necessary state of charge of an energy storage device of the vehicle for the vehicle to reach a desired destination. If so, the step of controlling the vehicle based on the obtained information regarding predicted rolling resistance of the vehicle may comprise controlling charging of the energy storage device to reach a target state of charge which is derived based on and thus depends on (is equal to or above) the determined necessary state of charge of the energy storage device, preferably e.g. exceeding the determined necessary state of charge with a certain percentage or amount. This *inter alia* has the advantage of ensuring that the vehicle has sufficient driving energy in order to reach the desired destination and/or reduce the costs associated with charging.

Moreover, the present invention provides a method, performed by a control device, for estimating distance to empty for a vehicle according to claim 13. Said method has the advantage of considerably improving an estimation of distance to empty in view of the improved accuracy in predicted rolling resistance.

Moreover, in accordance with the present invention, a control device configured to predict rolling resistance of a vehicle is provided according to independent claim 14.

The duration of a transient tire rubber temperature behavior, and thus of a transient rolling resistance, may be estimated as suggested herein. Such and estimation could comprise estimating an initial tire rubber temperature at the start of a planned upcoming driving event, or at the start of a portion of said planned upcoming driving event. Then, based on the estimated initial tire rubber temperature, ambient temperature and predicted driving conditions for the vehicle, a duration until the tire rubber has reached a temperature equal to or above a predetermined temperature threshold can be estimated. Such a threshold would preferably have some relation to a steady-state temperature under the given conditions.

One or more portions, e.g. a plurality of portions, of a planned driving event during which a transient tire temperature behavior of the vehicle may, e.g. is expected to, occur, could be identified. Such portions could be parts of the upcoming driving event having different speed requirements, and/or portions with a planned intermediate stop between them, and/or portions during which the vehicle carries different loads. A duration of transient tire rubber temperature behavior of the vehicle could be estimated for each of said one or more portions based on predicted driving conditions of the vehicle for the respective portions of the planned upcoming driving event. A rolling resistance for the upcoming driving event could then be predicted based on said estimated durations (for the portions), and a modelled rolling resistance for the duration of the transient tire temperature behavior for each of said one or more identified portions of the planned driving event. Such modelled rolling resistance may be e.g. an average rolling resistance coefficient for the duration, derived based on the model.

The model may take input in form of ambient temperature, tire rubber temperature at start of portion, estimated duration of transient tire rubber temperature behaviour during each portion, and driving conditions during the respective portions.

Determining an estimated duration of transient tire rubber temperature behavior may comprise determining the estimated duration of transient tire rubber temperature based on stored reference data, such as a look-up table. The predicted driving conditions may suitably comprise at least vehicle speed and vehicle load.

A rolling resistance model may be a transient rolling resistance coefficient model, and may, as previously stated, take into account/be a function of ambient temperature and predicted or determined driving conditions for a vehicle, and further an estimated tire temperature at the initiation (start) of the transient tire temperature behavior. The model may further take into account one or more parameters that may cause a cooling or warming effect of the tire during driving, such as rain, wet road conditions, humidity and/or braking

The control device provides the same advantages as described above with reference to the corresponding method for predicting rolling resistance of a vehicle.

The present invention further provides a vehicle comprising the control device described above. The vehicle may be a heavy land-based vehicle, such as a truck or a bus. The vehicle may be a battery electric vehicle, a hybrid vehicle, a plug-in hybrid vehicle, or a fuel cell vehicle, but is not limited thereto.

BRIEF DESCRIPTION OF DRAWINGS

Fig. 1     schematically illustrates a side view of an example of a vehicle,

Fig. 2     schematically illustrates a cross-sectional view of a tire,

Fig. 3     schematically illustrates an example of a change in rolling resistance over time as a result of change in vehicle speed,

Fig. 4     represents a flowchart schematically illustrating one exemplifying embodiment of the method for predicting rolling resistance according to the present disclosure,

Fig. 5     schematically illustrates an exemplifying embodiment of a device may constitute, comprise or be a part of the control device configured to predict rolling resistance according to the present disclosure,

Fig. 6     illustrates rolling resistance measurements plotted over time at different ambient temperatures as derived through experimental tests,

Fig. 7     shows the rolling resistance measurements normalized with the measured stabilized $C_{rr}$ value at +25 °C,

Fig. 8     illustrates stabilized difference between ambient temperature and tire rubber temperature over different ambient temperatures,

Fig. 9      illustrates stabilized rolling resistance plotted over different ambient temperatures,

Fig. 10      illustrates the rolling resistance plotted over tire rubber temperature at the tire shoulder at various ambient temperatures,

Fig. 11      illustrates rolling resistance plotted over tire rubber temperature at the apex of the tire,

Fig. 12      illustrates the temperature warm up at (a) the tire apex and (b) the tire shoulder,

Fig. 13      illustrates difference between tire shoulder temperature and ambient temperature plotted over time,

Fig. 14      illustrates actual rolling resistance and averaged rolling resistance for a given drive time at different ambient temperatures,

Fig. 15      illustrates rolling resistance results with dry and wet driving conditions plotted over time,

Fig. 16      illustrates simulated BET driving range when rolling resistance and air density is varied with 0% and 100% relative air humidity,

Fig. 17      illustrates range calculations with varying drive time at different ambient temperatures.

DETAILED DESCRIPTION

The invention will be described in more detail below with reference to exemplifying embodiments and the accompanying drawings. The invention is however not limited to the exemplifying embodiments discussed and/or shown in the drawings, but may be varied within the scope of the appended claims. Furthermore, the drawings shall not be considered drawn to scale as some features may be exaggerated in order to more clearly illustrate the invention or features thereof.

The herein described method for predicting rolling resistance of a vehicle has primarily been developed based on the increased importance of being able to estimate a vehicle's power consumption as accurate as possible in view of the developments of partly or fully electrical vehicles and the associated range considerations. Thus, the herein described method for predicting rolling resistance is primarily developed for use in conjunction with vehicles comprising a propulsion unit that may be powered by an energy storage device, such as a hybrid vehicle, a fully electric vehicle or a fuel cell vehicle. It should however be noted that the herein described method for predicting rolling resistance may also be utilized for other vehicles, such as conventional vehicles driven (solely) by a combustion engine. The vehicle is however a land-based vehicle comprising at least one tire. Furthermore, the herein described method for predicting rolling resistance is primarily developed for a heavy vehicle, such as a truck or a bus. The method may however be used also for other vehicles, such as passenger cars or a vehicle belonging to the lightweight or mediumweight segment of trucks, if desired.

The propulsion power needed for driving a vehicle is dependent on the force opposing the vehicle's motion, the vehicle's efficiency (more specifically, powertrain efficiency), and the vehicle speed. The force opposing the vehicle's motion comprises the sum of a force caused by rolling resistance, a force caused by air resistance and a force caused by slope of the road. The necessary propulsion power may also be affected by other energy consumers of the vehicle, for example systems for climatizing the interior of the vehicle or systems for controlling operating temperature of the energy storage device. Thus, it is evident that the instantaneous propulsion power needed will vary over time during a driving event, for example due to possible variation in vehicle speed and characteristics of the road section.

One of the largest parts of the power losses for heavy vehicles is caused by tire rolling resistance. Today, tire manufacturers are required to test rolling resistance in accordance with standardized tests in order to obtain certain labels. For example, in Europe, to obtain the UNECE R117 label (Amendment of Rolling Resistance in R117, 2009) the tire manufacturers are mandated to test rolling resistance according to the ISO 28580:2009 test standard. This test method provides a value of stabilized rolling resistance at +25 °C ambient temperature after 3h. This is a convenient method to compare rolling resistance of different tires. However, in real road applications, rolling resistance is much more complex. This in turn results in difficulties if the rolling resistance provided according to this standard is used in simulations of driving energy consumption for a vehicle. More specifically, one of the drawbacks of the ISO 28580:2009 test standard is that it does not take into account variations of ambient temperature or transient rolling resistance. Other test standards exist, such as SAE J1269 and SAE J2452. SAE J2452 considers also vehicle speed, which is advantageous. However, SAE J1269 and SAE J2452 also have the drawback of not considering the effects of transient rolling resistance and different ambient temperatures.

The European Commission has developed a vehicle energy consumption calculation tool called VETCO, with the purpose of determining $CO_2$ emissions and fuel consumption from heavy duty Vehicles with a Gross Vehicle Weight above 3500 kg. The inputs for VECTO are characteristic parameters to determine the power consumption of every relevant vehicle component. Amongst others, the parameters for rolling resistance, air drag, masses and inertias, gearbox friction, auxiliary power and engine performance are input values to simulate fuel consumption and $CO_2$ emissions on standardized driving cycles. However, the tool uses constant rolling resistance values and disregards the effect of ambient temperature on rolling resistance and transient rolling resistance.

To improve the prediction of driving energy consumption in real operational conditions and estimations using various simulation tools, it would be beneficial to obtain more data regarding rolling resistance at various ambient temperatures and different operating conditions of the vehicle. This has in fact been achieved by the present inventors, as will be explained in more detail below.

Most of the rolling resistance is related to the viscoelastic behavior of the tire rubber when strain is imposed while rolling. In a rolling motion, the rubber compresses at the leading edge of the tire contact patch and decompresses at the trailing edge of the contact patch. These loading and unloading events form an asymmetric contact pressure that shifts the resultant force in front of the tire rotation axis with an offset. This shifted resultant force creates a braking moment, which is the largest part of the rolling resistance. Moreover, the viscoelasticity dissipates energy into heat that in turn cause warming of the tire rubber.

The loading and unloading of the rubber causes hysteresis resulting from reorganization of entanglements of polymer chains and breaking of vas der Waals bonds, which are affected by temperature. Thus, rolling resistance decreases with increasing temperature of the tire rubber.

During driving of a vehicle, the tire warms up until the strain-induced heating effect and cooling effects from the surrounding environment (and road) reach a thermal balance. During this warm-up period rolling resistance is decreased considerably, and results in transient rolling resistance. Transient rolling resistance can also occur as a result of for example change in vehicle speed and/or sudden change in weather conditions.

The research performed until now has not resulted in a complete understanding of rolling resistance under realistic driving conditions, except in situations where steady-state conditions are present. However, the present inventors have performed extensive testing, part of which will be described below, to investigate the effect of tire rubber temperature on rolling resistance. It has been found that transient rolling resistance resulting from temperature changes in the tire rubber, more specifically temperature changes in the circumferential portion of the tire, has a great impact on power consumption of the vehicle. Furthermore, it has been found that the ambient temperature also greatly affects the steady-state rolling resistance as well as the transient rolling resistance. Measuring the tire rubber temperature at the circumferential portion of the tire during actual driving is in practice not possible due to the difficulty in arranging a temperature sensor at a relevant position in the tire. However, the present inventors have found that it is possible to model the transient rolling resistance and that it is therefore possible to take this into account when for example estimating power consumption needed for the propulsion of the vehicle. This greatly improves the accuracy in the estimated power consumption needed for the propulsion of the vehicle, which is something that may be used for various purposes as will be evident from the disclosure below.

It should be noted that this is not the same thing as measuring the tire pressure or the temperature of the air/fluid inside the tire, which are more of secondary effects, since they follow on/after the change in rubber temperature caused by rubber stress/strain - hysteresis, as described above. Therefore, when wanting to accurately estimate rolling resistance, it is important to look at the first order effect (rubber temperature), and not on less accurate results caused by the first order effect.

Thus, although the tire pressure also may change due to temperature variations of the air/fluid inside the tires, these changes do not reflect the actual behaviour of the rolling resistance. As mentioned above, this tire pressure (and corresponding fluid temperature) is a secondary result and will also, in addition to not accurately representing the rubber temperature/rolling resistance, have a time delay to the actual rubber temperature / rolling resistance.

In accordance with the present disclosure, a method for predicting rolling resistance of a vehicle is provided. The method comprises, when there is an expectation of variation in tire rubber temperature at a circumferential portion of at least one tire of the vehicle over time, modelling transient rolling resistance as a function of ambient temperature and based on predicted or determined driving conditions for the vehicle, thereby obtaining information regarding a variation of the predicted rolling resistance over time.

A variation in tire rubber temperature at a circumferential portion of at least one tire of the vehicle may for example be expected based on a determination that a driving event or portion thereof is to be initiated after a (short or long) standstill of the vehicle, or on a prediction or determination of change in driving conditions. Changes in driving conditions that may affect the tire rubber temperature at a circumferential portion thereof, while the vehicle is in motion, include for example a change of vehicle speed (acceleration or deceleration) and/or a change in load distribution on one or more tires (for example resulting from raising or lowering a tag axle of the vehicle). A variation in tire rubber temperature at a circumferential portion of the at least one tire may also be expected based on a predicted or determined change in weather conditions, for example if it starts to rain or the vehicle reaches a wet road section. A variation in tire rubber temperature at a circumferential portion of the at least one tire may also be expected based on a predicted or determined change in ambient temperature. It should here be noted that it is not necessary to actually determine that there is or will be a change in tire rubber temperature at the circumferential portion thereof, in order to perform the step of modelling transient rolling resistance. In contrast, it is sufficient that there is a reason for expecting such a variation in circumferential tire rubber temperature in order to perform the step of modelling transient rolling resistance.

The above mentioned predicted or determined driving conditions for the vehicle used when modelling the transient rolling resistance may include at least vehicle load and vehicle speed. Another example of a driving condition that may be considered for this purpose is load distribution. Also, aging and/or wear of the tires may be considered, if desired.

Modelling transient rolling resistance may advantageously further be based on an estimated current temperature of at least one tire of the vehicle at a point in time at which it is expected that the variation in tire rubber temperature is initiated, i.e. starts. In view of the fact that it is the temperature in the circumferential portion of the tire that directly affects the rolling resistance, said estimated current temperature of the at least one tire may preferably be an estimated current temperature of the tire at the circumferential portion thereof. It should however be noted that it is also possible to use an estimated current temperature at another portion of the tire. The latter is however less preferred since it does not result in the same accuracy in the predicted rolling resistance as the one possible when using an estimated temperature at the circumferential portion of the tire.

For the purpose of modelling transient rolling resistance taking into account estimated current rubber temperature of at least one tire of the vehicle at a point in time at which it is expected that the variation in tire rubber temperature is initiated, the method may further comprise estimating said current rubber temperature of the at least one tire of the vehicle at a circumferential portion of the tire. This may be performed by estimating the current temperature at the circumferential portion based on historical data relating to driving conditions of the vehicle and ambient temperature. For example, if the vehicle has been at standstill for a long period of time, such as overnight, the current temperature at the circumferential portion of the tire may be estimated to correspond to the ambient temperature. However, if the vehicle has for example be driven at a constant speed on a flat road for an extended period of time and without any changes in weather or road conditions, the current temperature at the circumferential portion of the tire may be estimated to have reached a substantially steady-state temperature where there is a thermal balance between the heat dissipated in the tire and the surrounding conditions. Such a steady-state temperature may have been predetermined through experimental results. Yet another example includes a short stop of the vehicle which is not sufficiently long to cool down the tire rubber temperature at the circumferential portion thereof to ambient temperature. In such a case, the current tire rubber temperature (when the vehicle is to be brought in motion again) may be estimated taking into consideration the estimated tire rubber temperature when the vehicle stopped and the cooling down of the tire rubber temperature at the circumferential portion thereof resulting from the stop.

Alternatively, estimating the current rubber temperature at the circumferential portion of the tire may be based on a tire rubber temperature of the at least one tire of the vehicle measured using a temperature sensor. It should here be noted that it may in practice be very difficult to arrange a temperature sensor in the circumferential portion of the tire rubber. However, a reading from a temperature sensor arranged at another portion of the tire may be used for estimating the rubber temperature at the circumferential portion. In such a case, the reading of the temperature sensor arranged at a position other that the circumferential portion should preferably be combined with the above described historical data relating to driving conditions of the vehicle when estimating the current rubber temperature at the circumferential portion of the tire in order to obtain sufficient accuracy in the estimated current rubber temperature at the at a point in time at which it is expected that the variation in tire rubber temperature is initiated.

Moreover, in certain cases, the tires of the vehicle may be subjected to a preconditioning procedure for the purpose of reducing the initial rolling resistance when the vehicle has been at standstill for a longer period of time. Such a preconditioning procedure may comprise warming the tire, for example by using exhaust gas from the vehicle. In such cases, the step of estimating a current rubber temperature of at least one tire, at a point in time at which it is expected that the variation in tire rubber temperature is initiated, may be based on parameters relating to the preconditioning procedure, such as duration of the preconditioning procedure and amount of supplied heat.

The method for predicting rolling resistance according to the present disclosure may comprise a step of determining an expectation of variation in tire rubber temperature at a circumferential portion of at least one tire of the vehicle over time based on at least one indication selected from the group comprising or consisting of an indication that a driving event or portion thereof is to be initiated after a vehicle stop, an indication of a change in weather conditions that may affect rolling resistance, and an indication of a change in the predicted or determined driving conditions sufficient to affect rolling resistance. In order to avoid the effect of short-termed temporary changes in vehicle speed which would unduly increase the computational efforts needed without having a substantial effect on rolling resistance, the indication of a change in predicted or determined driving conditions sufficient to affect rolling resistance may comprise a change in vehicle speed which is above a predetermined threshold. In other words, if a change in speed is lower than the predetermined threshold, the change in speed would not be considered to be sufficient to substantially affect rolling resistance and may be ignored. Such a predetermined threshold may for example be 2 km/h or 3 km/h. Furthermore, the predetermined threshold may be dependent of the vehicle speed, if desired. For example, such a predetermined threshold may be different for vehicle speeds equal to or above 70 km/h compared to a predetermined threshold at lower vehicle speeds. The indication of a change in weather conditions that may affect rolling resistance may at least comprise an indication of rain and/or a wet road surface. Rain and/or wet road surfaces imply a cooling effect on the tire rubber temperature and therefore has a high likelihood of affecting the rolling resistance.

The modelling of transient rolling resistance may be performed according to Equation 1 below, in which $C_{rr}(t)$ represent the time-dependent rolling resistance, $T_{tire\text{-}cir}(t)$ represent the time-dependent temperature of the tire at the circumferential portion thereof, and $k_1$, $k_2$, and $k_3$ each represents coefficients and $k_4$ represents a constant. Each of $k_1$, $k_2$, $k_3$ and $k_4$ dependents of ambient temperature and driving conditions of the vehicle. The coefficients and the constant may be predetermined based on experimental results.

$$C_{rr}(t) = k_1 * T_{tire-cir}^{3}(t) + k_2 * T_{tire-cir}^{2}(t) + k_3 * T_{tire-cir}(t) + k_4 \qquad \text{Eq. 1}$$

The method for predicting rolling resistance according to the present disclosure may further comprise, when it is predicted or determined that the tire rubber temperature at a circumferential portion of at least one tire of the vehicle will have a temperature equal to or above a predetermined temperature threshold for an identified period of time, predicting rolling resistance of the vehicle during said identified period of time based on ambient temperature and tire rubber temperature at a circumferential portion of at least one tire of the vehicle. In such a case, predicting rolling resistance of the vehicle during said identified period of time may comprise calculating an adjustment factor for rolling resistance based on ambient temperature and tire rubber temperature at a circumferential portion of at least one tire, and calculating an adjusted rolling resistance for the identified period of time based on a predetermined rolling resistance as determined through experimental results and the calculated adjustment factor, thereby obtaining the predicted rolling resistance during said identified period of time. The predetermined rolling resistance may for example correspond to the rolling resistance determined according to standardized methods. Such a predetermined rolling resistance may for example be provided by the tire manufacturer, either as a EU labelling value or a rolling resistance coefficient value for a certain condition (such as at 25°C ambient temperature after 3h driving).

In accordance with the present disclosure, a method for controlling a vehicle is also provided. Said method comprises obtaining information regarding predicted rolling resistance of the vehicle, obtained by the method for predicting rolling resistance of a vehicle as described above, and controlling the vehicle based on the obtained information regarding predicted rolling resistance of the vehicle. Said method has the advantage of enabling a better control of the vehicle in view of the improved accuracy in predicted rolling resistance.

According to a first alternative, said method for controlling a vehicle may comprise, based on the obtained information regarding predicted rolling resistance of the vehicle, planning an upcoming driving event for the vehicle. For example, the obtained information regarding predicted rolling resistance of the vehicle may for example be used for identifying that the energy consumption of the vehicle would be unduly high if driving the vehicle as originally intended, and that one or more parameters of an originally planned driving event need to be adjusted. It may for example be determined that it would be appropriate to select a different vehicle speed and/or vehicle speed profile for the upcoming driving event, alter the propulsion unit (if more than one is available) used for propulsion for parts of the driving event, alter energy storage device control parameters, and/or alter the planned route in order to arrive at a different energy consumption of the vehicle. The method may thereafter comprise controlling the vehicle in accordance with the planned driving event which appears to be the most appropriate alternative. This *inter alia* has the advantage of enabling a more cost-effective driving event of the vehicle and thereby reducing the total cost of operation of the vehicle over the service life thereof.

According to a second alternative, the method for controlling a vehicle may comprise, in consideration of the obtained information regarding predicted rolling resistance of the vehicle, determining a necessary state of charge of an energy storage device of the vehicle for the vehicle to reach a desired destination e.g. after having performed a desired driving event such as a tour. If so, the step of controlling the vehicle based on the obtained information regarding predicted rolling resistance of the vehicle may comprise controlling charging of the energy storage device to reach a target state of charge which is derived based on and thus depends on (e.g. is equal to or above) the determined necessary state of charge of the energy storage device. This *inter alia* has the advantage of ensuring that the vehicle has sufficient driving energy in order to reach the desired destination and/or reduce the costs associated with charging (including the duration of out of operation of the vehicle as well as the energy costs). This in turn affects the total cost of operation of the vehicle over the service life thereof. That is, the charging procedure can be terminated prematurely, i.e. before the energy storage is fully charged. The charging can be terminated, i.e. interrupted, discontinued or ended, when the energy storage device has reached a target state of charge. A suitable target state of charge could be one by which a planned upcoming driving event could be completed with a certain, selected or predetermined margin. Such a margin could be formulated e.g. as a desired percentage of energy remaining in the energy storage device after the upcoming driving event is completed, and the desired destination is reached. The desired destination may be the same location as the starting point, e.g. after performing a driving event such as a delivery tour. That is, the target state of charge is preferably derived based on the determined necessary state of charge of the energy storage device for reaching the desired destination, and thus depends on said determined necessary state of charge. With the methods available today for estimating electric energy consumption, it would be unwise to settle for less than fully charged batteries. However, the possibility to achieve high accuracy of the predicted rolling resistance enabled by the herein disclosed technology opens for this possibility to save time at the charging facilities. Thereby, deliveries could be made in time without range anxiety, and charging facilities could be used more efficiently. Obviously, the possibility to terminate a charging procedure at a reached target state of charge is relevant for electric vehicles.

Moreover, the present disclosure provides a method for estimating distance to empty for a vehicle. The term "distance to empty" as used herein is intended to mean the range the vehicle may be driven based on the vehicle's available driving energy. Said driving energy may for example be stored in an energy storage device, such as an energy storage device comprising one or more batteries, and/or be in form of liquid or gaseous fuel (such as in the case of biogas driven vehicles or fuel cell vehicles) onboard the vehicle. The method for estimating distance to empty comprises predicting rolling resistance in accordance with the above-described method for predicting rolling resistance, thereby obtaining information regarding a variation of the predicted rolling resistance over time. Said method further comprises, based on available driving energy of the vehicle, estimating distance to empty in consideration of the obtained information regarding variation of the predicted rolling resistance over time. Said method has the advantage of considerably improving an estimation of distance to empty in view of the improved accuracy in predicted rolling resistance.

The performance of the herein described methods may be governed by programmed instructions. These programmed instructions typically take the form of a computer program which, when executed in or by a control device, cause the control device to effect desired forms of control action. Such instructions may typically be stored on a computer-readable medium.

The present disclosure further relates to a control device configured to predict rolling resistance of a vehicle in accordance with the method for predicting rolling resistance described above. The control device may be configured to perform any one of the steps of the method for predicting rolling resistance as described herein.

More specifically, in accordance with the present disclosure a control device configured to predict rolling resistance of a vehicle is provided. The control device is configured to, when there is an expectation of variation in tire rubber temperature at a circumferential portion of at least one tire of the vehicle over time, modelling transient rolling resistance as a function of ambient temperature and based on predicted or determined driving conditions for the vehicle, thereby obtaining information regarding a variation of the predicted rolling resistance over time.

The control device may further be configured to perform the method for controlling a vehicle as described above and/or the method for estimating distance to empty as described above.

Alternatively, one or both of the method for controlling a vehicle as described above and the method for estimating distance to empty as described above may be performed by a control device different from the above-described control device configured to predict rolling resistance. In other words, the present disclosure also provides a control device configured to control a vehicle in accordance with the above-described method for controlling a vehicle as described above, as well as a control device configured to estimate distance to empty in accordance with the above-described method for estimating distance to empty for a vehicle. If not being the same control device as the control device configured to predict rolling resistance, the latter two control devices may each be configured to communicate with the control device configured to predict rolling resistance of a vehicle at least for the purpose of obtaining information therefrom.

Any one of the above-described control devices may comprise one or more control units. In case of a control device comprising a plurality of control units, each control unit may be configured to control a certain function or a certain function may be divided between more than one control units.

Furthermore, any one of the control devices mentioned above may be a control device arranged onboard the vehicle, or a control device arranged remote from the vehicle. If arranged remote from the vehicle, the control device may be configured to communicate with one or more vehicle controllers arranged onboard the vehicle, for example in order to present information to a driver of the vehicle or to control the vehicle. Alternatively, parts of the control device may, if desired, be arranged remote from the vehicle. For example, one or more control units of the control device may be arranged at a remote control center and configured to communicate with one or more control units of the control device arranged on board the vehicle.

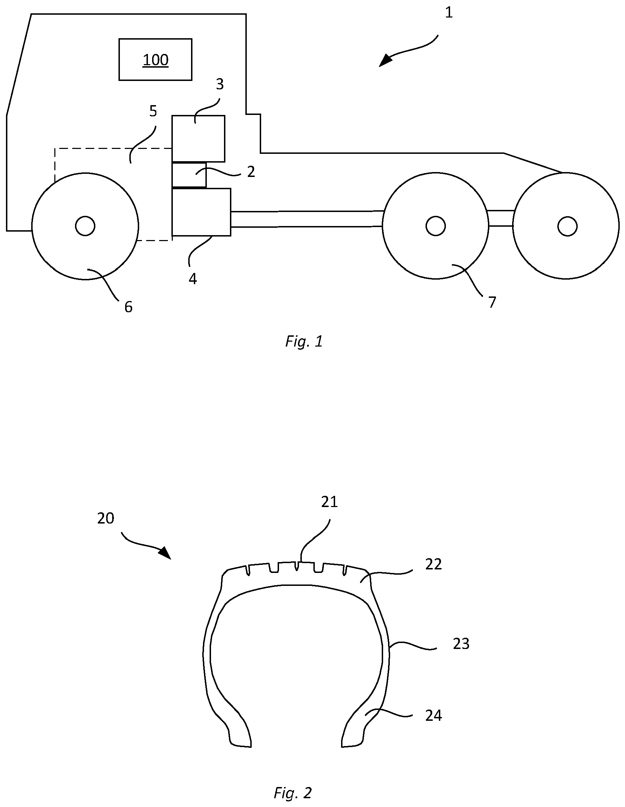

Figure 1 schematically illustrates a side view of an example of a vehicle 1. The vehicle may be a fully electric vehicle or a hybrid vehicle. Furthermore, the vehicle may be a heavy vehicle, such as a bus or a truck, but is not limited thereto. The vehicle 1 comprises a first propulsion unit in the form of an electric motor 2. The electric motor 2 is powered by an energy storage device 3 of the vehicle. The vehicle 1 may comprise a second propulsion unit, such as a combustion engine 5 and/or a second electric motor (not shown), if desired. The electric motor 2 may further be operated as a generator, for example during regenerative braking of the vehicle, and thereby charging the energy storage device. The vehicle 1 may further comprise a gearbox 4 configured to selectively transfer propulsion torque from the propulsion unit(s) to the driving wheels 7 of the vehicle. The vehicle 1 further comprises front wheels 6, which may typically be non-driven wheels.

The vehicle 1 may further comprise a control device 100 configured to predict rolling resistance. The control device 100 may be configured to communicate with a remote control center, control devices of other vehicles, and/or control units of the infrastructure, via any previously known communication system therefore, for the purpose of exchanging various forms of data. Examples of such data may comprise data for positioning of the vehicle and/or map data (including topographic data), data regarding speed limits or other traffic data (such as potential queuing or the like), and/or meteorological data.

For the purpose of clarifying the various portions of a tire as discussed herein, Figure 2 schematically illustrates a cross-sectional view of a tire 20 (such as the tire of any one of the wheels 6 or 7 in Figure 1). The tire 20 has a crown 21 and a shoulder 22. The shoulder 22 is the area where the thread and sidewall 23 of the tire meet. The crown 21 and the shoulder 22 together form a circumferential portion of the tire and are configured to face towards a road surface. The tire 20 further comprises an apex 24. The apex 24 is not in contact with the road surface but arranged closer to the wheel rim (not shown).

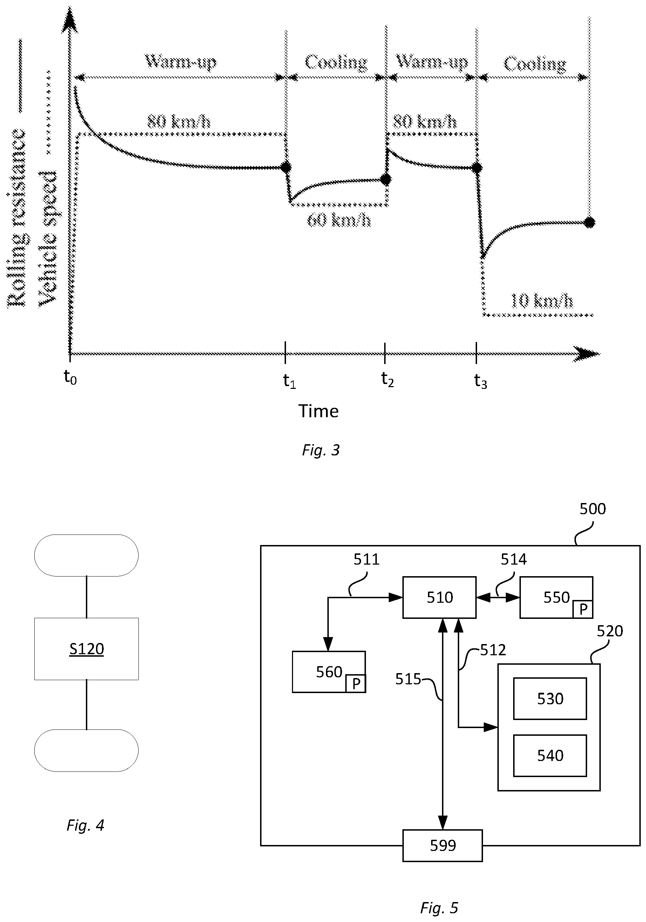

Figure 3 schematically illustrates an example of a change in rolling resistance over time as a result of change in vehicle speed. For ease of illustration, it is here assumed that there is no change in ambient temperature over time and that there are no external cooling effects, such as rain and/or wet road. In the figure, the vehicle starts driving at $t_0$ and the speed is quickly increased to 80 km/h. The tire rubber temperature at $t_0$ is here assumed to essentially correspond to the ambient temperature. The vehicle speed is thereafter changed to 60 km/h at $t_1$ and back to 80 km/h at $t_2$, At $t_3$, the vehicle speed is changed to 10 km/h. For the purpose of this illustration, it is here assumed that a thermal balance between dissipation of heat from the rubber and temperature effects from the surrounding environment is reached at or shortly before $t_1$, $t_2$, and $t_3$, respectively. It should however be noted that this may not necessarily occur during realistic driving conditions where said thermal balance may be difficult to reach.

As can be seen from Figure 3, the rolling resistance decreases during the period from $t_0$ to $t_1$. This a result of dissipation of energy during loading/unloading of the rubber causing a warm-up of the tire rubber temperature as described above. Although the tire rubber temperature has increased from $t_0$ to $t_1$, the reduction of vehicle speed at $t_1$ results in a drop of rolling resistance resulting from the change in vehicle speed causing a lower frequency of the loading/unloading of the rubber. Driving at the lower speed of 60 km/h also causes a cooling of the tire rubber temperature, compared to the tire rubber temperature reached at $t_1$, because of the lower frequency of the loading/unloading of the rubber. In other words, there is no longer a thermal balance when the vehicle speed is changed at $t_1$. This in turn will result in an increase in rolling resistance during the period of driving at 60 km/h, i.e. between $t_1$ and $t_2$, until a thermal balance has been reached again (here assumed to be reached at or shortly before $t_2$). At $t_2$, when the vehicle speed is increased to 80 km/h, there is an increase in rolling resistance resulting from the increase vehicle speed leading to an increased frequency of the loading/unloading of the rubber. This increased vehicle speed will also over time result in an increase in the tire rubber temperature due to higher dissipation of energy, and the rolling resistance therefore decreases between $t_2$ and $t_3$ until thermal balance has been reached again. The change in vehicle speed at $t_3$ will result in a drop in rolling resistance resulting from the change of vehicle speed causing a lower frequency of loading/unloading the rubber. The change in vehicle speed will therefore also result in less dissipation of heat which may heat up the tire and therefore a cooling effect on the tire rubber temperature. This means that rolling resistance increases over time after $t_3$, as shown in the figure.

Figure 4 represents a flowchart schematically illustrating one exemplifying embodiment of the method for predicting rolling resistance according to the present disclosure. The method comprises a step S120 of, when there is an expectation of variation in tire rubber temperature at a circumferential portion of at least one tire of the vehicle over time, modelling transient rolling resistance as a function of ambient temperature and based on predicted or determined driving conditions for the vehicle, thereby obtaining information regarding a variation of the predicted rolling resistance over time.

Figure 5 schematically illustrates an exemplifying embodiment of a device 500. The control device 100 described above may for example comprise the device 500, consist of the device 500, or be comprised in the device 500.

The device 500 comprises a non-volatile memory 520, a data processing unit 510 and a read/write memory 550. The non-volatile memory 520 has a first memory element 530 in which a computer program, e.g. an operating system, is stored for controlling the function of the device 500. The device 500 further comprises a bus controller, a serial communication port, I/O means, an A/D converter, a time and date input and transfer unit, an event counter and an interruption controller (not depicted). The non-volatile memory 520 has also a second memory element 540.

There is provided a computer program P that comprises instructions for predicting rolling resistance of a vehicle. The computer program comprises instructions for, when there is an expectation of variation in tire rubber temperature at a circumferential portion of at least one tire of the vehicle over time, modelling transient rolling resistance as a function of ambient temperature and based on predicted or determined driving conditions for the vehicle, thereby obtaining information regarding a variation of the predicted rolling resistance over time.

The program P may be stored in an executable form or in a compressed form in a memory 560 and/or in a read/write memory 550.

The data processing unit 510 may perform one or more functions, i.e. the data processing unit 510 may effect a certain part of the program P stored in the memory 560 or a certain part of the program P stored in the read/write memory 550.

The data processing device 510 can communicate with a data port 599 via a data bus 515. The non-volatile memory 520 is intended for communication with the data processing unit 510 via a data bus 512. The separate memory 560 is intended to communicate with the data processing unit 510 via a data bus 511. The read/write memory 550 is adapted to communicate with the data processing unit 510 via a data bus 514. The communication between the constituent components may be implemented by a communication link. A communication link may be a physical connection such as an optoelectronic communication line, or a non-physical connection such as a wireless connection, e.g. a radio link or microwave link.

When data are received on the data port 599, they may be stored temporarily in the second memory element 540. When input data received have been temporarily stored, the data processing unit 510 is prepared to effect code execution as described above.

Parts of the methods herein described may be affected by the device 500 by means of the data processing unit 510 which runs the program stored in the memory 560 or the read/write memory 550. When the device 500 runs the program, methods herein described are executed.

In the following, rolling resistance tests will be described for the purpose of demonstrating the temperature effect on rolling resistance for a heavy vehicle.

The rolling resistance tests were conducted at Scania's climate wind tunnel where the ambient temperature can be altered. The measurement drum has a diameter of 2.5 m, which is 0.5 m larger than the recommended diameter in the ISO 28580:2009 standard. The usage of the larger drum than according to the standard has the advantage of causing less warming up of the tires and better mimics a flat road. If the drum diameter is too small, the tire rubber temperature becomes too high, and the measurement results might become less relevant. Approximation equations to convert drum measurements to flat road results are commonly known. However, in the present disclosure, the measurements given are direct drum tests where no conversion equations were used.

The wind and drum speed were set to 80 km/h and the tests were conducted at four different ambient temperatures, namely +25 °C, +5 °C, -15 °C, and -30 °C. To make it relevant to measure the tire in such a large temperature range, the chosen tire has a Mud + Snow (M+S) and Three Peak Mountain Snow Flake (3PMSF) marking for winter usage. Dual tires were used on the measured axle. The measured tires had a 5.1 kg/ton labelled rolling resistance value (class C rolling resistance (EU, 2009)).

Before the tests, the tires were preconditioned by driving them 1500 km using 10 500 kg axle load and 8.5 bar inflation pressure. The reason for said preconditioning was that the measurements would show the actual rolling resistance instead of evaluating the reduction of rolling resistance because of strain-softening in new tires. To measure the tire rubber temperature, the tires were equipped with K-type thermocouples. These K-type thermocouples were glued into drilled holes located at the tire shoulder and near the apex, respectively. In order to ensure that the tires had a substantially homogenous and known temperature at the start of the tests, the tires were kept in the measurement temperature (i.e. the different ambient temperatures) for at least 12 hours before starting the tests.

To separate tire rolling resistance from the gearbox and differential losses, the drive shafts were removed during the tests. Moreover, before the start of every test, the truck was lifted with an overhead crane and the drum was driven for 30 minutes (at 80 km/h) to warm up the drum bearings and stabilize the force measurement. The last averaged value of the drum rolling loss was subtracted afterwards from the rolling resistance measurements to remove most of the parasitic losses from the drum bearings. After this, the drive axle was lowered on the drum so that the tires were barely touching the drum and driven for 15 minutes. This step was done to warm up the wheel bearings. Finally, the tire pressure was adjusted to 8.5 bar, the axle was lowered on the drums and 10.2 tons axle load was applied on the drive axle. These steps were repeated in all of the measurement temperatures. This means that the measured rolling resistance includes the losses from the wheel bearings and the aerodynamic resistance of the tires. The effects of these are however estimated to be considerably lower than the rolling resistance caused by the viscoelastic effects.

The change of rolling resistance in wet driving conditions was measured by spraying water on the tires. During the rain/wet tests, 0.2 l/s water was sprayed to the left tires at 80 km/h vehicle speed. Here, the hydrodynamic effects (i.e. pumping of a water layer away from the contact patch) are considered to be close to zero because of the relatively low amount of water spraying and the usage of the outer drum measurements where the water layer build-up is less likely than if using flat surface measurements.

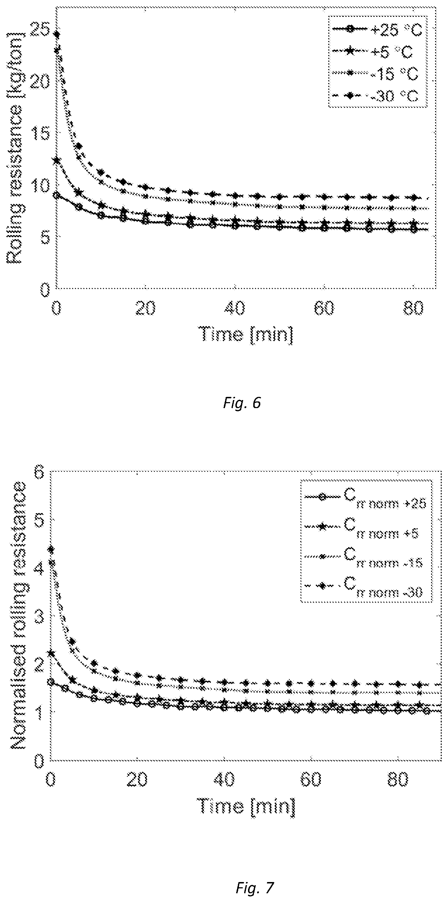

Figure 6 illustrates rolling resistance plotted over time at different ambient temperatures according to the dry test. From the results, it can be seen that the transient rolling resistance starts with a higher value and reaches a lower, stabilized, rolling resistance roughly after 45-80 minutes.

Furthermore, it is shown that, with decreasing ambient temperature, the rolling resistance increases. The (measured) rolling resistance is hereafter also denominated $C_{rr}$.

Figure 7 shows the rolling resistance measurements normalized with the measured stabilized $C_{rr}$ value at +25 °C. It has been found that, at -15°C and -30 °C, the initial rolling resistance is over four times the stabilized rolling resistance at +25 °C. At -30°C, the stabilized rolling resistance is approximately 1.65 larger compared to the values at + 25°C.

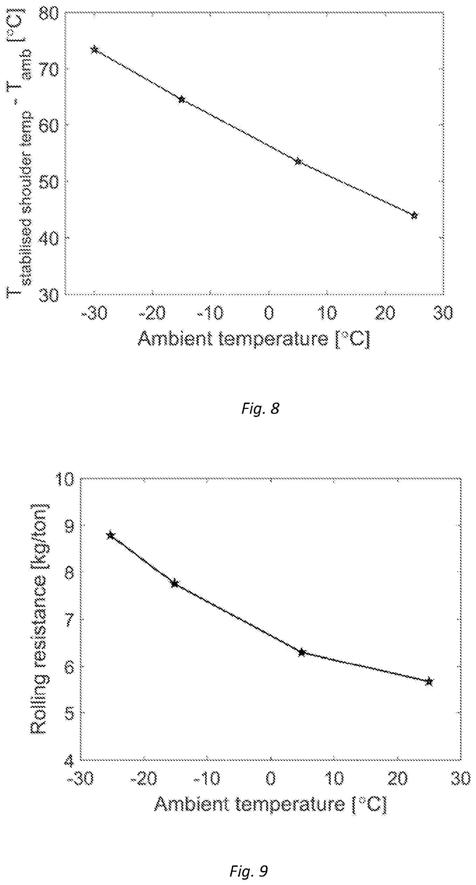

The temperature difference between the stabilized tire shoulder temperature ($T_{stabilised\ shoulder\ temp}$) and ambient temperature ($T_{amb}$) has a linear relationship with ambient temperature, as shown in Figure 8, while the stabilized rolling resistance as a function of ambient temperature has a nonlinear relationship, as shown in Figure 9. An increase in tire rubber temperature during driving directly indicates that the tires dissipate a larger amount of energy.

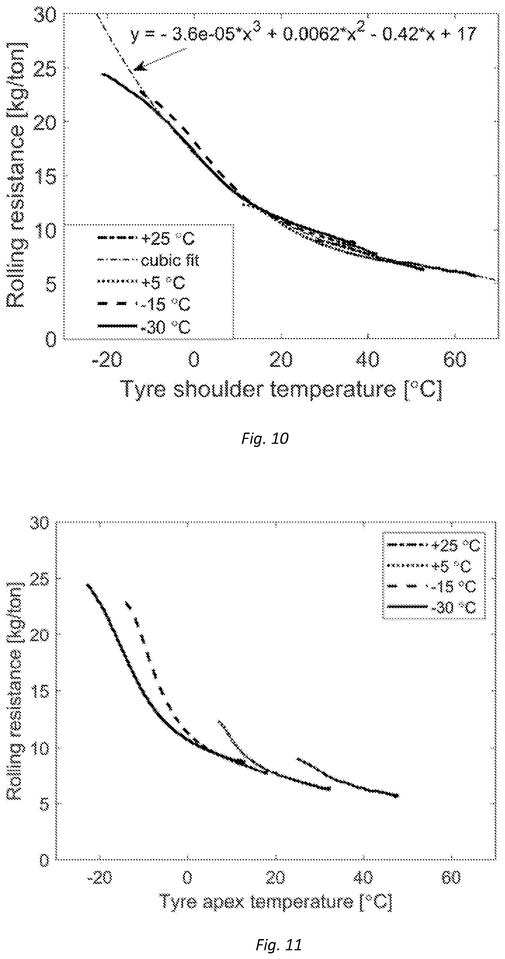

Figure 10 illustrates the rolling resistance plotted over tire rubber temperature at the tire shoulder at various ambient temperatures, and Figure 11 illustrates the rolling resistance plotted over tire rubber temperature at the apex. These figures demonstrate that rolling resistance seems to have a strong correlation with the tire shoulder temperature. However, temperature measurements near the apex seem to be a less relevant indicator for the rolling resistance.

Based on the results shown in Figure 10, it has been found that it is possible to approximate the rolling resistance $C_{rr}$ as a function of tire rubber temperature $T_{tire-cir}$ at a circumferential portion of the tire (such as the tire shoulder temperature according to the measurements) using a cubic function according to Equation 2.

$$C_{rr} = k_1 * T_{tire-cir}{}^3 + k_2 * T_{tire-cir}{}^2 + k_3 * T_{tire-cir} + k_4 \qquad \text{Eq. 2}$$

where $k_1$, $k_2$, and $k_3$ each represents coefficients and $k_4$ is a constant. Although the coefficients and the constant would vary, Equation 2 is believed to be applicable to all pneumatic tires, or at least pneumatic tires with filler reinforced rubber. For the specific results shown in Figure 10, $k_1 = -3.6e - 05$, $k_2 = 0.0062$, $k_3 = 0.42$, and $k_4 = 17$ as also illustrated in the figure.

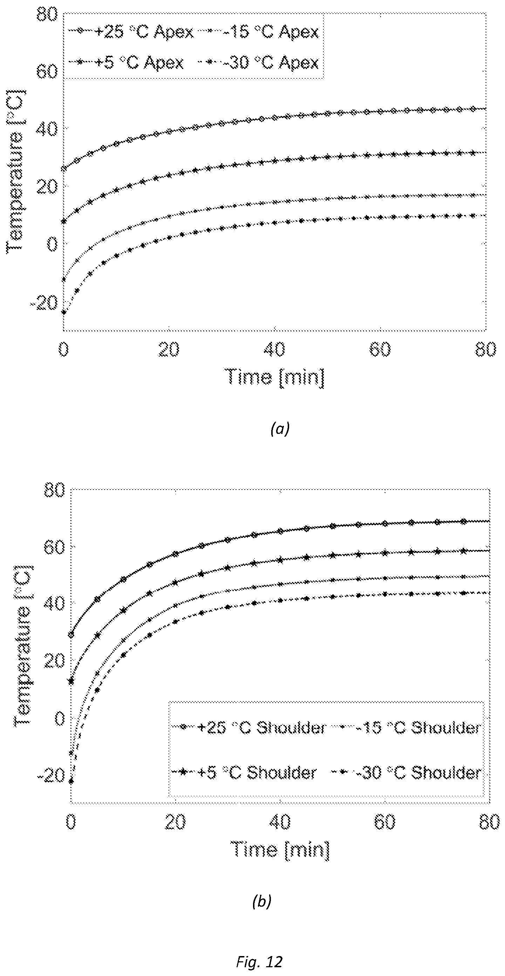

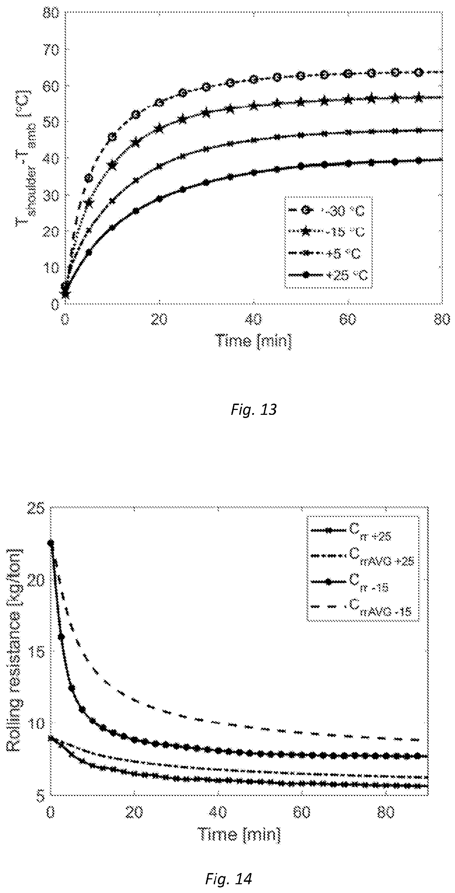

Figure 12(a) illustrates the temperature warm up at the tire apex and Figure 12(b) illustrates the temperature warm up at the tire shoulder. It can be clearly seen that the shoulder measurements reach higher temperatures than the apex measurements. Moreover, the apex temperatures reach a substantially steady temperature slower compared to the tire shoulder temperatures. Furthermore, not only does the tire rubber temperature converge to a lower temperature when the ambient temperature decreases, as shown in Figure 12, but also the differences between the tire shoulder temperature and ambient temperature increase with the decreasing ambient temperatures. This is shown in Figure 13. This is an indicator that more energy must be put into the tire to heat up a large mass of rubber with a certain type of heat capacity up to a higher temperature difference between the tire and ambient temperature.

According to one alternative, the transient part of the rolling resistance could be presented as an average rolling resistance over a certain drive time at different temperatures, which in some cases could be a more meaningful value to compare in range calculations without actually modelling the transient rolling resistance at every instance. To get a more representative value of the rolling resistance for a given drive event, an averaged rolling resistance over a certain drive time, $C_{rr\_AVG}(t)$, is proposed according to Equation 3, where $t_{drive\_time}$ is the duration of the drive event.

$$C_{rr\_AVG}(t) = \frac{1}{t_{drive\_time}} \int_{t=o}^{t_{drive\_time}} C_{rr}(t)dt \qquad \text{Eq. 3}$$

An averaged rolling resistance plot gives an insight into the real-life rolling resistance at different drive times. Figure 14 shows both the actual and averaged rolling resistance $C_{rr\_AVG}$ for a given drive time at different ambient temperatures, more specifically at -15°C and +25°C, respectively. It can be seen that, as an example, when driving 50 minutes at -15 °C, the average rolling resistance would be about 1.75 kg/ton higher than the current $C_{rr}(t)$ value. The proposed average rolling resistance plots can be extracted with commonly used testing methods used according to the ISO 28580:2009 EU labelling (except for the coast-down method).

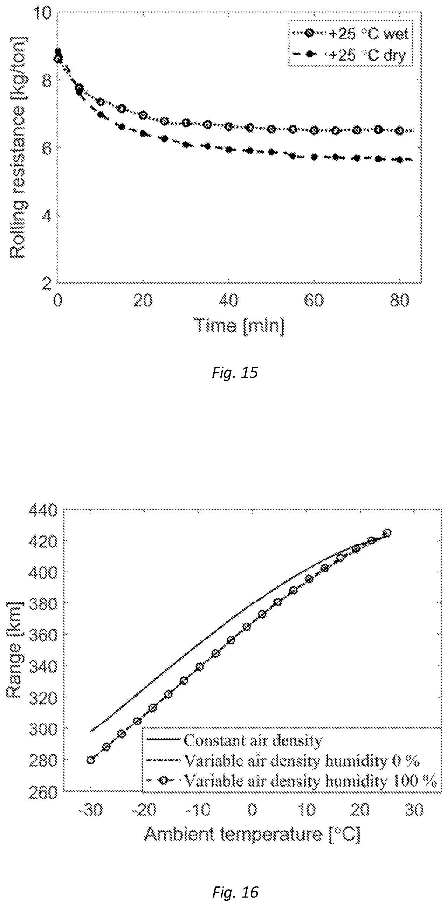

Figure 15 illustrates rolling resistance results with dry and wet driving conditions at ambient temperature +25 °C plotted over time. It can be seen that the tests starts from a similar rolling resistance, but the dry measurements converge into approximately 15% lower rolling resistance than the wet measurements. The fact that both rolling resistance measurements start from similar values indicates that there is not enough water spraying to generate a water layer that the tire has to pump away from the contact surface of the tire. Therefore, it can be concluded that most of the increase in rolling resistance in this test is due to lower tire rubber temperature caused by the wet driving conditions.

Furthermore, to illustrate the importance of considering variation of rolling resistance in range estimations, simulations were conducted comparing the range of a hypothetical long haulage battery electric truck (BET) driving at a constant velocity of 80 km/h at different ambient temperatures ($T_{amb}$). The following values are chosen for the range calculation: the battery size ($W_{bat}$) is 600 kWh, the state of charge window ($d_{SOC}$) is 80 % (useable battery capacity), battery and the total powertrain efficiency ($\eta_{pt}$) is 0.94, the aerodynamic drag coefficient ($C_d$) is 0.5 and the cross-sectional area of the vehicle front ($A$) is 10 m$^2$. For simplification, it is assumed that the vehicle has the same tires at every axle with the same rolling resistance coefficient. Furthermore, a vehicle weight ($m_{truck}$) of 40 tons is used in the simulations. The average rolling resistance after driving 155 min ($C_{rr\_AVG}$) (determined according to Equation 3 above) used in the simulations was 5.9 kg/ton at +25 °C, 6.6 kg/ton at +5 °C, 8.3 kg/ton at -15 °C, and 9.3 kg/ton at -30 °C. The force opposing the vehicle motion is calculated according to Equation 4.

$$F_r = C_{rr\_AVG}(T_{amb})m_{truck}g + \frac{1}{2}\rho_{air}(T_{amb}, \Phi)C_dAV^2 + m_{truck}\frac{dV}{dt} + m_{truck}g\sin\alpha + \frac{P_{int}}{V}$$

Eq. 4

where average rolling resistance $C_{rr\_AVG}$ is a function of ambient temperature $T_{amb}$, the density of air $\rho_{air}$ is a function of both ambient temperature $T_{amb}$ and relative air humidity $\Phi$, $g$ is the gravitational acceleration and $V$ is the vehicle velocity. For simplicity, it here is assumed that the inclination of the road $\alpha$ and internal and accessory losses $P_{int}$ are zero. The vehicle is driving in a long haulage application, which is why acceleration losses can be assumed to be near zero also. Both air density and rolling resistance are varied respective temperatures. Dry air density is calculated according to Equation 5, where p represents pressure and $R_{specific}$ is the mass-specific gas constant.

$$\rho(T_{amb}) = \frac{p}{R_{specific}T_{amb}}, (R_{specific} = 287.058\frac{J}{kgK})$$

Eq. 5

Calculations and coefficients for the humid air are done using the method shown in Davis, R. S. (1992) 'Equation for the determination of the density of moist air (1981/91 )', Metrologia, 29, pp. 67-70, doi: 10.1088/0026-1394/29/1/008.
The needed propulsion power $P_r$ for the vehicle is calculated according to Equation 6 and the resulting range $S_{range}$ is calculated according to Equation 7.

$$P_r = \frac{F_rV}{\eta_{pt}}$$

Eq. 6

$$S_{range} = \frac{d_{SOC}W_{bat}V}{P_r}$$

Eq. 7

Figure 16 illustrates the effect of different ambient temperatures on the simulated BET range because of the change in rolling resistance according to the earlier mentioned average rolling resistance values (at t=155 min). The largest change is because of the change in rolling resistance (solid line). The change of air density also plays some role for the range (dashed line), but there seems to be only marginal difference between zero relative humidity and 100% relative humidity (dashed line with circles).
Furthermore, it can be clearly seen that the range drops significantly with decreasing temperature. At a very cold temperature, -30 °C, the range has dropped approximately 29% from the range at +25 °C ambient temperature only because of the rolling resistance. When both rolling resistance and aerodynamic resistance is varied, the decrease in range is 34%.

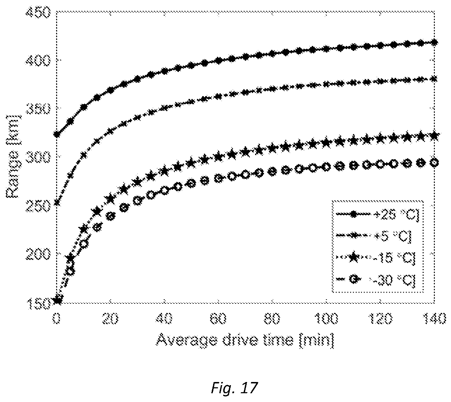

Figure 17 depicts the range that the vehicle can cover with different lengths of driving trips, where the averaged rolling resistance varies depending on the drive time = X. As an example, if all the trips are only 20 minutes long (X=20) and the tires always have time to cool down fully during the stops, the vehicle could cover approximately 325 km distance at +5 °C. If the trips would be 160 minutes long at the same temperature the vehicle would have a 380 km range. This is a very important finding, which could be very valuable when planning routes including stops for e.g. commercial vehicles. In regard of a planned upcoming driving event, each X minute trip or drive, here exemplified with X=20, could be what is earlier referred to as a portion of the planned upcoming driving event. The different portions of a driving event could, however, each have a different duration and/or length

**Claims**

1. A method, performed by a control device (100), for predicting rolling resistance of a vehicle (1), the method comprising:

   when there is an expectation of variation in tire rubber temperature at a circumferential portion of at least one tire of the vehicle over time, modelling transient rolling resistance as a function of ambient temperature and based on predicted or determined driving conditions for the vehicle, thereby obtaining information regarding a variation of the predicted rolling resistance over time, wherein said modelling of transient rolling resistance is performed according to the equation

$$C_{rr}(t) = k_1 * T_{tire-cir}^3(t) + k_2 * T_{tire-cir}^2(t) + k_3 * T_{tire-cir}(t) + k_4$$

wherein

$C_{rr}(t)$ represent the time-dependent rolling resistance,
$T_{tire\text{-}cir}(t)$ represent the time-dependent temperature of the tire at the circumferential portion thereof,
$k_1$, $k_2$, and $k_3$ each represents coefficients, and
$k_4$ represents a constant,
each of $k_1$, $k_2$, $k_3$ and $k_4$ being dependent of ambient temperature and driving conditions of the vehicle.

2. The method according to claim 1, wherein modelling transient rolling resistance is further based on an estimated current temperature of the rubber of at least one tire of the vehicle at a point in time at which it is expected that the variation in tire rubber temperature is initiated, such as after an event where the tire rubber temperature has cooled down, but not reached the ambient temperature, or after a change in vehicle speed.

3. The method according to any one of the preceding claims, further comprising a step of determining an expectation of variation in tire rubber temperature at a circumferential portion of at least one tire of the vehicle over time based on at least one indication selected from the group comprising an indication that a driving event or portion thereof is to be initiated after a vehicle stop, an indication of a change in weather conditions that may affect rolling resistance, and an indication of a change in the predicted or determined driving conditions sufficient to affect rolling resistance.

4. The method according to claim 3, wherein the indication of a change in predicted or determined driving conditions sufficient to affect rolling resistance comprises a change in vehicle speed which is above a predetermined threshold.

5. The method according to any one of the preceding claims, further comprising
when it is predicted or determined that the tire rubber temperature at a circumferential portion of at least one tire of the vehicle will have a temperature equal to or above a predetermined temperature threshold for an identified period of time, predicting rolling resistance of the vehicle during said identified period of time based on ambient temperature and tire rubber temperature at a circumferential portion of at least one tire of the vehicle.

6. The method according to claim 5, wherein predicting rolling resistance of the vehicle during said identified period of time comprises:

calculating an adjustment factor for rolling resistance based on ambient temperature and tire rubber temperature at a circumferential portion of at least one tire, and
calculating an adjusted rolling resistance for the identified period of time based on a predetermined rolling resistance as determined through experimental results and the calculated adjustment factor, thereby obtaining the predicted rolling resistance during said identified period of time.

7. A method, performed by a control device, for controlling a vehicle, the method comprising:

obtaining information regarding predicted rolling resistance of the vehicle, obtained by the method for predicting rolling resistance of the vehicle in accordance with any one of the preceding claims, and
controlling the vehicle based on the obtained information regarding predicted rolling resistance of the vehicle.

8. The method according to claim 7, wherein the method comprises:

based on the obtained information regarding predicted rolling resistance of the vehicle, planning an upcoming driving event for the vehicle, and
wherein the step of controlling the vehicle based on the obtained information regarding predicted rolling resistance of the vehicle comprises controlling the vehicle in accordance with the planned driving event.

9. The method according to claim 7 or 8, wherein the method comprises:

in consideration of the obtained information regarding predicted rolling resistance of the vehicle, determining a necessary state of charge of an energy storage device of the vehicle for the vehicle to reach a desired destination, and
wherein the step of controlling the vehicle based on the obtained information regarding predicted rolling resistance of the vehicle comprises controlling charging of the energy storage device to reach a target state of charge which depends on (e.g. is equal to or above) the determined necessary state of charge of the energy storage device.

10. The method according to claim 9, wherein the controlling of the charging of the energy storage device to reach a target state of charge which depends on (e.g. is equal to or above) the determined necessary state of charge of the energy storage device comprises terminating the charging when the target state of charge is reached

11. The method according to claim 9 or 10, wherein the desired destination is reached by performing a planned upcoming driving event comprising a plurality of portions with an expected respective variation in tire rubber temperature over time.

12. The method according to any of claims 8-11, wherein the planned upcoming driving event comprises at least one planned stop.

13. A method, performed by a control device, for estimating distance to empty for a vehicle, the method comprising:

predicting rolling resistance in accordance with the method according to any one of claims 1 to 7, thereby obtaining information regarding a variation of the predicted rolling resistance over time,
based on available driving energy of the vehicle, estimating distance to empty in consideration of the obtained information regarding variation of the predicted rolling resistance over time.

14. A control device (100) configured to predict rolling resistance of a vehicle (1), wherein the control device is configured to:

when there is an expectation of variation in tire rubber temperature at a circumferential portion of at least one tire of the vehicle over time, modelling transient rolling resistance as a function of ambient temperature and based on predicted or determined driving conditions for the vehicle, thereby obtaining information regarding a variation of the predicted rolling resistance over time, wherein said modelling of transient rolling resistance is performed according to the equation

$$C_{rr}(t) = k_1 * T_{tire-cir}{}^3(t) + k_2 * T_{tire-cir}{}^2(t) + k_3 * T_{tire-cir}(t) + k_4$$

wherein

$C_{rr}(t)$ represent the time-dependent rolling resistance, $T_{tire-cir}(t)$ represent the time-dependent temperature of the tire at the circumferential portion thereof,
$k_1$, $k_2$, and $k_3$ each represents coefficients, and
$k_4$ represents a constant,
each of $k_1$, $k_2$, $k_3$ and $k_4$ being dependent of ambient temperature and driving conditions of the vehicle.

15. A vehicle comprising the control device according to claim 14

**Patentansprüche**

1. Verfahren, das von einer Steuervorrichtung (100) ausgeführt wird, zur Vorhersage eines Rollwiderstands eines Fahrzeugs (1), wobei das Verfahren umfasst:

wenn eine Änderung einer Reifengummitemperatur an einem Umfangsabschnitt mindestens eines Reifens des Fahrzeugs in Anhängigkeit der Zeit zu erwarten ist, Modellieren eines transienten Rollwiderstands als Funktion einer Umgebungstemperatur und auf der Basis vorhergesagter oder ermittelter Fahrbedingungen für das Fahrzeug, wodurch Informationen über eine Änderung des vorhergesagten Rollwiderstands in Anhängigkeit der Zeit gewonnen werden, wobei das Modellieren des transienten Rollwiderstands gemäß der Gleichung durchgeführt wird

$$C_{rr}(t) = k_1 * T_{tire-cir}{}^3(t) + k_2 * T_{tire-cir}{}^2(t) + k_3 * T_{tire-cir}(t) + k_4$$

wobei

$C_{rr}(t)$ den zeitabhängigen Rollwiderstand darstellt,

$T_{tire-cir}(t)$ die zeitabhängige Temperatur des Reifens an dessen Umfangsabschnitt darstellt,

$k_1$, $k_2$ und $k_3$ jeweils Koeffizienten darstellen, und

$k_4$ eine Konstante darstellt,

wobei $k_1$, $k_2$, $k_3$ und $k_4$ jeweils von der Umgebungstemperatur und den Fahrbedingungen des Fahrzeugs abhängen.

2. Verfahren nach Anspruch 1, wobei das Modellieren des transienten Rollwiderstands ferner auf einer geschätzten aktuellen Temperatur des Gummis mindestens eines Reifens des Fahrzeugs zu einem Zeitpunkt basiert, zu dem erwartet wird, dass die Änderung der Reifengummitemperatur einsetzt, beispielsweise nach einem Ereignis, bei dem die Reifengummitemperatur abgekühlt ist, aber noch nicht die Umgebungstemperatur erreicht hat, oder nach einer Änderung der Fahrzeuggeschwindigkeit.

3. Verfahren nach einem der vorhergehenden Ansprüche, das ferner einen Schritt umfasst, bei dem eine Erwartung einer Änderung der Reifengummitemperatur an einem Umfangsabschnitt mindestens eines Reifens des Fahrzeugs in Anhängigkeit der Zeit basierend auf mindestens einer Indikation bestimmt wird, der aus der Gruppe ausgewählt ist, die eine Indikation, dass ein Fahrereignis oder ein Teil davon nach einem Fahrzeugstillstand eingeleitet werden soll, eine Indikation für eine Änderung der Wetterbedingungen, die den Rollwiderstand beeinflussen können, und eine Indikation für eine Änderung der vorhergesagten oder ermittelten Fahrbedingungen, die ausreicht, um den Rollwiderstand zu beeinflussen, umfasst.

4. Verfahren nach Anspruch 3, wobei die Indikation für eine Änderung der vorhergesagten oder ermittelten Fahrbedingungen, die ausreicht, um den Rollwiderstand zu beeinflussen, eine Änderung der Fahrzeuggeschwindigkeit umfasst, die über einem vorbestimmten Schwellenwert liegt.

5. Verfahren nach einem der vorhergehenden Ansprüche, das ferner umfasst

wenn vorhergesagt oder ermittelt wird, dass die Reifengummitemperatur an einem Umfangsabschnitt mindestens eines Reifens des Fahrzeugs eine Temperatur aufweist, die gleich oder höher als ein vorbestimmter Temperaturschwellenwert ist, Vorhersagen des Rollwiderstands des Fahrzeugs während des genannten identifizierten Zeitraums auf der Basis der Umgebungstemperatur und der Reifengummitemperatur an einem Umfangsabschnitt mindestens eines Reifens des Fahrzeugs.

6. Verfahren nach Anspruch 5, wobei das Vorhersagen des Rollwiderstands des Fahrzeugs während des identifizierten Zeitraums umfasst:

Berechnen eines Anpassungsfaktors für den Rollwiderstand auf der Basis der Umgebungstemperatur und der Reifengummitemperatur an einem Umfangsabschnitt mindestens eines Reifens, und

Berechnen eines angepassten Rollwiderstands für den identifizierten Zeitraum auf der Basis eines vorbestimmten Rollwiderstands, wie er durch Versuchsergebnisse und den berechneten Anpassungsfaktor ermittelt wurde, wodurch der vorhergesagte Rollwiderstand während des identifizierten Zeitraums erhalten wird.

7. Verfahren, das von einer Steuervorrichtung durchgeführt wird, zur Steuerung eines Fahrzeugs, wobei das Verfahren umfasst:

Erhalten von Informationen bezüglich eines vorhergesagten Rollwiderstands des Fahrzeugs, die durch das Verfahren zur Vorhersage eines Rollwiderstands des Fahrzeugs gemäß einem der vorhergehenden Ansprüche erhalten wurden, und

Steuern des Fahrzeugs auf der Grundlage der erhaltenen Informationen bezüglich des vorhergesagten Rollwiderstands des Fahrzeugs.

8. Verfahren nach Anspruch 7, wobei das Verfahren umfasst:

Planen eines bevorstehenden Fahrereignisses für das Fahrzeug auf der Basis der erhaltenen Informationen bezüglich des vorhergesagten Rollwiderstands des Fahrzeugs die, und

wobei der Schritt des Steuerns des Fahrzeugs auf der Basis der erhaltenen Informationen bezüglich des vorhergesagten Rollwiderstands des Fahrzeugs das Steuern des Fahrzeugs gemäß dem geplanten Fahrereignis umfasst.

9. Verfahren nach Anspruch 7 oder 8, wobei das Verfahren umfasst:

unter Berücksichtigung der erhaltenen Informationen bezüglich des vorhergesagten Rollwiderstands des Fahrzeugs, Bestimmen eines erforderlichen Ladezustands einer Energiespeichervorrichtung des Fahrzeugs, damit das Fahrzeug ein gewünschtes Ziel erreicht, und
wobei der Schritt des Steuerns des Fahrzeugs auf der Basis der erhaltenen Informationen bezüglich des vorhergesagten Rollwiderstands des Fahrzeugs das Steuern des Ladens des Energiespeichers umfasst, um einen Ziel-Ladezustand zu erreichen, der von dem ermittelten erforderlichen Ladezustand des Energiespeichers abhängt (z. B. diesem entspricht oder darüber liegt).

10. Verfahren nach Anspruch 9, wobei das Steuern des Ladens des Energiespeichers, um einen Ziel-Ladezustand zu erreichen, der von dem ermittelten erforderlichen Ladezustand des Energiespeichers abhängt (z. B. diesem entspricht oder darüber liegt), das Beenden des Ladens, wenn der Ziel-Ladezustand erreicht ist, umfasst.

11. Verfahren nach Anspruch 9 oder 10, wobei das gewünschte Ziel durch die Durchführung eines geplanten bevorstehenden Fahrereignisses erreicht wird, das eine Mehrzahl von Abschnitten mit einer erwarteten jeweiligen Änderung der Reifengummitemperatur in Anhängigkeit der Zeit umfasst.

12. Verfahren nach einem der Ansprüche 8 bis 11, wobei das geplante bevorstehende Fahrereigniss mindestens einen geplanten Stopp umfasst.

13. Verfahren, das von einer Steuervorrichtung durchgeführt wird, zum Schätzen einer verbleibenden Reichweite eines Fahrzeugs, wobei das Verfahren umfasst:

Vorhersagen eines Rollwiderstands gemäß dem Verfahren nach einem der Ansprüche 1 bis 7, wodurch Informationen bezüglich einer Änderung des vorhergesagten Rollwiderstands in Anhängigkeit der Zeit gewonnen werden,
Schätzen der Reichweite unter Berücksichtigung der erhaltenen Informationen bezüglich der Änderung des vorhergesagten Rollwiderstands in Anhängigkeit der Zeit auf der Basis der verfügbaren Fahrenergie des Fahrzeugs.

14. Steuervorrichtung (100), die konfiguriert ist, den Rollwiderstand eines Fahrzeugs (1) vorherzusagen, wobei die Steuervorrichtung konfiguriert ist:

wenn eine Änderung einer Reifengummitemperatur an einem Umfangsabschnitt mindestens eines Reifens des Fahrzeugs in Anhängigkeit der Zeit zu erwarten ist, einen transienten Rollwiderstand als Funktion einer Umgebungstemperatur und auf der Basis vorhergesagter oder ermittelter Fahrbedingungen für das Fahrzeug zu modellieren, wodurch Informationen über eine Änderung des vorhergesagten Rollwiderstands in Anhängigkeit der Zeit gewonnen werden, wobei das Modellieren des transienten Rollwiderstands gemäß der Gleichung durchgeführt wird

$$C_{rr}(t) = k_1 * T_{tire\text{-}cir}^3(t) + k_2 * T_{tire\text{-}cir}^2(t) + k_3 * T_{tire\text{-}cir}(t) + k_4$$

wobei

$C_{rr}(t)$ den zeitabhängigen Rollwiderstand darstellt, $T_{tire\text{-}cir}(t)$ die zeitabhängige Temperatur des Reifens an dessen Umfangsabschnitt darstellt,
$k_1$, $k_2$ und $k_3$ jeweils Koeffizienten darstellen, und
$k_4$ eine Konstante darstellt,
wobei $k_1$, $k_2$, $k_3$ und $k_4$ jeweils von der Umgebungstemperatur und den Fahrbedingungen des Fahrzeugs abhängen.

15. Fahrzeug, das die Steuervorrichtung gemäß Anspruch 14 umfasst

**Revendications**

1. Procédé, réalisé par un dispositif de commande (100), pour prédire la résistance au roulement d'un véhicule (1), le procédé comprenant :

   lorsqu'il existe une attente de variation de la température du caoutchouc du pneu au niveau d'une portion circonférentielle d'au moins un pneu du véhicule au cours du temps, la modélisation de la résistance au roulement transitoire en fonction de la température ambiante et sur la base des conditions de conduite prédites ou déterminées pour le véhicule, obtenant ainsi des informations concernant une variation de la résistance au roulement prédite au cours du temps, dans lequel ladite modélisation de la résistance au roulement transitoire est réalisée selon l'équation

$$C_{rr}(t) = k_1 * T_{tire-cir}{}^3(t) + k_2 * T_{tire-cir}{}^2(t) + k_3 * T_{tire-cir}(t) + k_4$$

   dans laquelle
   $C_{rr}(t)$ représente la résistance au roulement en fonction du temps,
   $T_{tire-cir}(t)$ représente la température du pneu en fonction du temps au niveau de sa portion circonférentielle,
   $k_1$, $k_2$, et $k_3$ représentent chacun des coefficients, et
   $k_4$ représente une constante,
   chacun de $k_1$, $k_2$, $k_3$ et $k_4$ étant dépendants de la température ambiante et des conditions de conduite du véhicule.

2. Procédé selon la revendication 1, dans lequel la modélisation de la résistance au roulement transitoire est en outre basée sur une température actuelle estimée du caoutchouc d'au moins un pneu du véhicule à un moment auquel il est prévu que la variation de la température du caoutchouc du pneu soit lancée, par exemple après un événement où la température du caoutchouc du pneu s'est refroidie, mais n'a pas atteint la température ambiante, ou après un changement de la vitesse du véhicule.

3. Procédé selon l'une quelconque des revendications précédentes, comprenant en outre une étape de détermination d'une attente de variation de la température du caoutchouc du pneu au niveau d'une portion circonférentielle d'au moins un pneu du véhicule au cours du temps sur la base d'au moins une indication choisie dans le groupe comprenant une indication qu'un événement de conduite ou une portion de celui-ci doit être lancé après un arrêt du véhicule, indication d'un changement dans les conditions météorologiques qui peut affecter la résistance au roulement, et une indication d'un changement dans les conditions de conduite prédites ou déterminées suffisant pour affecter la résistance au roulement.

4. Procédé selon la revendication 3, dans lequel l'indication d'un changement dans des conditions de conduite prédites ou déterminées suffisant pour affecter la résistance au roulement comprend un changement dans la vitesse du véhicule qui est supérieur à un seuil prédéterminé.

5. Procédé selon l'une quelconque des revendications précédentes, comprenant en outre, lorsqu'il est prédit ou déterminé que la température du caoutchouc du pneu au niveau d'une portion circonférentielle d'au moins un pneu du véhicule aura une température égale ou supérieure à un seuil de température prédéterminé pendant une période de temps identifiée, la prédiction de la résistance au roulement du véhicule pendant ladite période de temps identifiée sur la base de la température ambiante et de la température du caoutchouc du pneu au niveau d'une portion circonférentielle d'au moins un pneu du véhicule.

6. Procédé selon la revendication 5, dans lequel la prédiction de la résistance au roulement du véhicule pendant ladite période de temps identifiée comprend :

   le calcul d'un facteur d'ajustement pour la résistance au roulement basé sur la température ambiante et la température du caoutchouc du pneu au niveau d'une portion circonférentielle d'au moins un pneu, et le calcul d'une résistance au roulement ajustée pour la période de temps identifiée sur la base d'une résistance au roulement prédéterminée telle que déterminée par des résultats expérimentaux et le facteur d'ajustement calculé, obtenant ainsi la résistance au roulement prédite pendant ladite période de temps identifiée.

7. Procédé, réalisé par un dispositif de commande, pour commander un véhicule, le procédé comprenant :

l'obtention d'informations concernant la résistance au roulement prédite du véhicule, obtenues par le procédé pour prédire la résistance au roulement du véhicule selon l'une quelconque des revendications précédentes, et la commande du véhicule sur la base des informations obtenues concernant la résistance au roulement prédite du véhicule.

**8.** Procédé selon la revendication 7, dans lequel le procédé comprend :

sur la base des informations obtenues concernant la résistance au roulement prédite du véhicule, la planification d'un événement de conduite à venir pour le véhicule, et
dans lequel l'étape de commande du véhicule sur la base des informations obtenues concernant la résistance au roulement prédite du véhicule comprend la commande du véhicule conformément à l'événement de conduite planifié.

**9.** Procédé selon la revendication 7 ou 8, dans lequel le procédé comprend :

en tenant compte des informations obtenues concernant la résistance au roulement prédite du véhicule, la détermination d'un état de charge nécessaire d'un dispositif de stockage d'énergie du véhicule pour que le véhicule atteigne une destination souhaitée, et
dans lequel l'étape de commande du véhicule sur la base des informations obtenues concernant la résistance au roulement prédite du véhicule comprend la commande de la charge du dispositif de stockage d'énergie pour atteindre un état de charge cible qui dépend (par exemple est égal ou supérieur à) de l'état de charge nécessaire déterminé du dispositif de stockage d'énergie.

**10.** Procédé selon la revendication 9, dans lequel la commande de la charge du dispositif de stockage d'énergie pour atteindre un état de charge cible qui dépend de (par exemple est égal ou supérieur à) l'état de charge nécessaire déterminé du dispositif de stockage d'énergie comprend l'arrêt de la charge lorsque l'état de charge cible est atteint.

**11.** Procédé selon la revendication 9 ou 10, dans lequel la destination souhaitée est atteinte en réalisant un événement de conduite à venir planifié comprenant une pluralité de portions avec une variation respective attendue de la température du caoutchouc du pneu au cours du temps.

**12.** Procédé selon l'une quelconque des revendications 8 à 11, dans lequel l'événement de conduite à venir planifié comprend au moins un arrêt planifié.

**13.** Procédé, réalisé par un dispositif de commande (100), pour estimer une distance d'autonomie restante pour un véhicule, le procédé comprenant :

la prédiction de la résistance au roulement conformément au procédé selon l'une quelconque des revendications 1 à 7, obtenant ainsi des informations concernant une variation de la résistance au roulement prédite au cours du temps,
sur la base de l'énergie de conduite disponible du véhicule, l'estimation de la distance d'autonomie restante en tenant compte des informations obtenues concernant la variation de la résistance au roulement prédite au cours du temps.

**14.** Dispositif de commande (100) configuré pour prédire la résistance au roulement d'un véhicule (1), dans lequel le dispositif de commande est configuré pour :

lorsqu'il existe une attente de variation de la température du caoutchouc du pneu au niveau d'une portion circonférentielle d'au moins un pneu du véhicule au cours du temps, modéliser la résistance au roulement transitoire en fonction de la température ambiante et sur la base des conditions de conduite prédites ou déterminées pour le véhicule, obtenant ainsi des informations concernant une variation de la résistance au roulement prédite au cours du temps, dans lequel ladite modélisation de la résistance au roulement transitoire est réalisée selon l'équation

$$C_{rr}(t) = k_1 * T_{tire-cir}^{3}(t) + k_2 * T_{tire-cir}^{2}(t) + k_3 * T_{tire-cir}(t) + k_4$$

dans laquelle

$C_{rr}(t)$ représente la résistance au roulement en fonction du temps,

$T_{tire\text{-}cir}(t)$ représente la température du pneu en fonction du temps au niveau de sa portion circonférentielle,

$k_1$, $k_2$, et $k_3$ représentent chacun des coefficients, et

$k_4$ représente une constante,

chacun de $k_1$, $k_2$, $k_3$ et $k_4$ étant dépendants de la température ambiante et des conditions de conduite du véhicule.

15. Véhicule comprenant le dispositif de commande selon la revendication 14.

Fig. 1

Fig. 2

Fig. 3

Fig. 4

Fig. 5

Fig. 6

Fig. 7

Fig. 8

Fig. 9

*Fig. 10*

*Fig. 11*

*(a)*

*(b)*

*Fig. 12*

*Fig. 13*

*Fig. 14*

*Fig. 15*

*Fig. 16*

*Fig. 17*

**EP 4 514 666 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2019016471 A1

**Non-patent literature cited in the description**

- **DAVIS, R. S.** Equation for the determination of the density of moist air (1981/91). *Metrologia*, 1992, vol. 29, 67-70